# EUROPEAN PATENT APPLICATION

(11) **EP 4 160 780 A1**
(43) Date of publication of application: **05.04.2023**
(21) Application number: 21902736.4
(22) Date of filing: 10.12.2021
(51) Int. Cl.: H01M 10/0587, H01M 10/0525, H01M 50/457, H01M 50/46

(54) **LITHIUM BATTERY**

(30) Priority: 10.12.2020 CN 202011451375
(71) Applicant: Zhuhai CosMX Battery Co., Ltd., Zhuhai, Guangdong 519180 (CN)
(72) Inventor: ZHAO, Junyi, Zhuhai, Guangdong 519180 (CN); ZOU, Hu, Zhuhai, Guangdong 519180 (CN)
(74) Representative: Vossius & Partner Patentanwälte Rechtsanwälte mbB
(86) International application number: PCT/CN2021/137219
(87) International publication number: WO 2022/122031

(57) **Abstract**

A lithium battery includes a wound core and tabs, in which the wound core is formed by stacking and winding an inner separator, a first electrode sheet, an outer separator, and a second electrode sheet, and the first electrode sheet and the second electrode sheet have opposite polarity; the inner separator is located at the innermost layer of the wound core, and each of the inner separator and the outer separator has a clamping section, a first straight section connected with the clamping section and located behind clamping section, and a tail laminating section extending beyond a tail end of the first electrode sheet, where the first straight section is located in front of the first electrode sheet, and the tail laminating section is a separator end, and the clamping section, the first straight section and the tail laminating section of the inner separator are respectively laminated with the clamping section, the first straight section and the tail laminating section of the outer separator; and a dry peeling force of each of the first straight sections of the inner separator and the outer separator is less than 8 N/m. This invention uses a separator with a specific surface peeling force to produce the wound core, avoiding the problems of the folding of electrode sheet and non-coated foil, and improving the qualified rate and quality of product.

## Description

This application claims priority to Chinese Patent Application No. 202011451375.1, entitled "Lithium Battery" and filed with the China National Intellectual Property Administration on December 10, 2020, the entire contents of which are incorporated in this application by reference.

### TECHNICAL FIELD

This invention belongs to a technical field of lithium ion batteries, and in particular relates to a lithium battery.

### BACKGROUND

The lithium battery includes a cell and tabs provided on the cell. The cell includes a separator, a positive electrode sheet and a negative electrode sheet. The separator is one of key materials of the lithium battery and is arranged between the positive and negative electrode sheets of the battery for separating the positive and negative electrode sheets to prevent short circuit of the battery. At present, the separators used in the lithium battery are generally polyolefin products with a hole structure, such as PE separator, PP separator, and PP/PE/PP three-layer separator. Inorganic particles, such as alumina particles, boehmite particles, magnesium oxide particles, etc., are coated on one-side or two-side surfaces of substrate separator, and based on this, the separator is subjected to double-sided pure glue coating or coating with mixed glue and ceramic particles to obtain a separator product finally, in which the glue may be a single PVDF or a mixture of multiple PVDFs, and the coating method may be a water-based coating or an oil-based coating. The water-based separator is a finished product obtained by dispersing and grinding a single type of PVDF or multiple types of PVDFs, a dispersing agent and a glue in water to form a suspension, and then coating after filtration; the water-based separator may be coated by means of a micro-concave roll transfer coating or a high-speed nozzle coating. The oil-based separator is a finished product obtained by dissolving a single type of PVDF or multiple types of PVDFs in an organic solvent (such as NMP, DMAC, etc.) according to a specific ratio, and then coating after forming a solution; the oil-based separator may be coated by means of micro-concave roll transfer coating or dip coating.

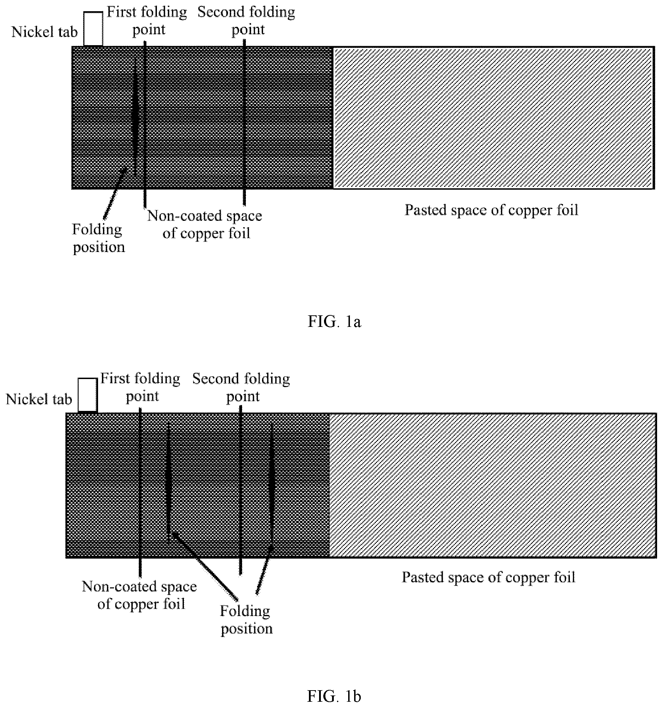

In the lithium battery, the separator and the electrode sheets are bonded together, and the adhesion force of the separator surface coating directly affects the winding, formation and other processes of the cell and the quality of the finished product. Unqualified adhesion force of separator surface coating may lead to quality defects such as folding of electrode sheets. FIGS. 1a and 1b are schematic diagrams of two kinds of electrode sheets being folded respectively. FIG. 1a shows a schematic diagram of a fold at a non-coated foil space after the winding machine completes a winding action, such a fold being caused by the failure to stretch the electrode sheet during a compaction stage under a tight adhesion between the separator and the copper foil at the head of the electrode sheet. After the wound core with such defects is dismantled, it is found that the first folding at the head of the electrode sheet will show an overlap similar to that indicated by the arrow in FIG. 1a (the location and size of the overlap are not limited to those shown in FIG. la). It can be seen that the overlap is a thin line with a darker color and a width of about 0-1 mm when observed under X-ray. FIG. 1b shows a schematic diagram of a folding because the electrode sheet cannot be stretched in time after the winding machine completes the winding action, in which the electrode sheet cannot be stretched in time, which is caused by an inconsistent force release on both sides of the single-sided paste-coated surface during the compaction stage of the wound core under a tight adhesion between the separator and the copper foil at the head of the electrode sheet. After the wound core with such defects is dismantled, it is found that the single-sided paste-coated surface at the head of the electrode sheet will appear an overlap similar to that indicated by the arrow in FIG. 1b (the location and size of the overlap are not limited to those shown in FIG. 1b). When the overlap is observed under X-ray, it can be seen that it is a thin line with a darker color and a width of about 0-1 mm. Folding of electrode sheet will easily lead to potential safety hazards in the batteries.

### SUMMARY

The purpose of this invention is to provide a lithium battery, which can reduce the phenomenon of poor production such as the folding of electrode sheet, and improve the yield of lithium batteries.

In order to achieve the above purpose, this invention adopts the following technical solutions.

A lithium battery includes a wound core and tabs, in which the wound core is formed by stacking and winding an inner separator, a first electrode sheet, an outer separator, and a second electrode sheet, and the first electrode sheet and the second electrode sheet have opposite polarity; the inner separator is located at the innermost layer of the wound core, and each of the inner separator and the outer separator has a clamping section, a first straight section connected with and located behind the clamping section, and a tail laminating section extending beyond a tail end of the first electrode sheet, where the first straight section is located in front of the first electrode sheet, and the tail laminating section is a separator end, and the clamping section, the first straight section and the tail laminating section of the inner separator are respectively laminated with the clamping section, the first straight section and the tail laminating section of the outer separator, and a dry peeling force of each of the first straight section of the inner separator and the first straight section of the outer separator is less than 8 N/m.

More specifically, the dry peeling force is determined by the following steps:
S1: cutting a separator to be tested into separator samples with suitable size and aligning and stacking two pieces of separator samples to be tested;
S2: subjecting stacked separator samples to be tested to a hot-pressing treatment with a hot-pressing temperature of 100°C, a pressure of 0.2 MPa, and a hot-pressing time of 10 s;
S3: after the hot-pressing treatment is completed, separating the separator samples to be tested that are pressed together from one end of the separator samples to be tested, performing a 90° peeling, and recording a peeling force during separation of the separator samples to be tested, that is, the dry peeling force.

Preferably, the dry peeling force is a dry peeling force of a ceramic surface of the separator.

More specifically, each of the inner separator and the outer separator includes a base film, a ceramic layer and an adhesive layer, and a surface of the base film is provided with the ceramic layer or the adhesive layer, and an outer surface of the ceramic layer is provided with the adhesive layer; and a surface of the separator having both the ceramic layer and the adhesive layer is a ceramic surface, and at least one surface of each of the inner separator and the outer separator is the ceramic surface.

More specifically, surfaces of the inner separator and of the outer separator that are opposite to each other on the clamping section, the first straight section and the tail laminating section are ceramic surfaces.

More specifically, each of the inner separator and the outer separator includes a base film and an adhesive layer, and a surface of the base film on which the adhesive layer is disposed is an adhesive surface, and at least one surface of each of the inner separator and the outer separator is the adhesive surface.

More specifically, surfaces of the inner separator and of the outer separator that are opposite to each other on the clamping section, the first straight section and the tail laminating section are the adhesive surfaces.

More specifically, a length of the clamping section of the inner separator and a length of the clamping section of the outer separator are each 1-15% of a width of the wound core.

More specifically, a length of the first straight section of the inner separator and a length of the first straight section of the outer separator are each 40-50% of a width of the wound core.

More specifically, a length of the tail laminating section of the inner separator and a length of the tail laminating section of the outer separator are each ≥5 mm.

More specifically, the length of the tail laminating section of the inner separator and the length of the tail laminating section of the outer separator are each 0.1-10% of the width of the wound core.

Preferably, a dry peeling force of each of the first straight section of the inner separator and the first straight section of the outer separator is less than 5 N/m.

More specifically, both the inner separator and the outer separator have an adhesive transfer area ratio of 20-40%, the adhesive transfer area ratio is a ratio of an adhesive transfer mass to a separator area, and the adhesive transfer mass is calculated by subtracting a separator mass after dry peeling from a separator mass before dry peeling.

It can be seen from the above technical solutions that the wound core of the lithium battery of this invention is prepared by using the separator in which its first straight section has a specific dry peeling force, so that the separator is matched with other materials, the winding machine can stably output the product, and a battery structure with a folded rate of electrode sheets meeting the quality requirements is obtained, which is conducive to improve product yield and production efficiency. The dry peeling force of the separator (the adhesion force of separator coating) may be determined by directly the hot-pressing and compounding the separators, and then using an electronic universal testing machine to perform a peeling force test on the adhesive layers or the ceramic layers of the separator. The measured peeling force can be used to judge the battery hardness in the subsequent process in advance, and identify the adhesion force between respective main materials in the cell in advance, so as to select the separator material with the dry peeling force meeting the requirements, and then output the batteries with better hardness and better performance.

More specifically, ceramic particles and an adhesive polymer are contained in the ceramic layer; and the content of the ceramic particles is 85-92%.

More specifically, the ceramic particles are one or more of alumina, boehmite, and magnesia.

More specifically, the adhesive polymer is at least one of polyvinylidene fluoride, polyvinylpyrrolidone, vinylidene fluoride-hexafluoropropylene polymer, polyacrylonitrile, sodium carboxymethyl cellulose, sodium polyacrylate, polyacrylic acid, polyacrylate, styrene-butadiene copolymer, butadiene-acrylonitrile polymer, polyvinyl alcohol, polymethyl acrylate, polymethyl methacrylate, polyethyl acrylate, and polyacrylic acid-styrene polymer.

More specifically, D10 particle size is 0.15-0.3 µm, D50 particle size is 0.35-0.45 µm, D90 particle size is 0.6-0.8 µm, and D100 particle size is less than 4.5 µm.

More specifically, the adhesive layer includes an adhesive polymer, and the adhesive polymer is at least one of polyvinylidene fluoride, polyvinylpyrrolidone, vinylidene fluoride-hexafluoropropylene polymer, polyacrylonitrile, sodium carboxymethyl cellulose, sodium polyacrylate, polyacrylic acid, polyacrylate, styrene-butadiene copolymer, butadiene-acrylonitrile polymer, polyvinyl alcohol, polymethyl acrylate, polymethyl methacrylate, polyethyl acrylate and polyacrylic acid-styrene polymer.

More specifically, the adhesive layer has a thickness of 0.5 µm to 3 µm, and a packing density of 0.6 g/m² to 3.0 g/m².

More specifically, the separator is a water-based separator, and the adhesive layer includes an adhesive polymer, a binder and a dispersing agent, in which the content of the adhesive polymer is 92-96%, and the content of the binder is 2.5-5.5%, and the content of the dispersing agent is 1.5-2.5%; or, the separator is an oil-based mixed-coating separator, and the adhesive layer includes an adhesive polymer and ceramic particles, in which the content of the adhesive polymer is 30-50%, and the content of the ceramic particles is 50-70%; or, the separator is a pure oil-based separator, and the adhesive layer includes an adhesive polymer, and the adhesive polymer has a molecular weight of 0.3 million to 1 million.

### BRIEF DESCRIPTION OF DRAWINGS

In order to illustrate the embodiments of this invention more clearly, the accompanying drawings that need to be used in the description of the embodiments or prior arts will be introduced briefly as following. Obviously, the accompanying drawings in the following description are only some embodiments of this invention. For those skilled in the art, other accompanying drawings can also be obtained from these accompanying drawings without any creative effort.
FIG. 1a and FIG. 1b are schematic diagrams of folding of electrode sheet respectively.
FIG. 2 is a schematic structural diagram of a lithium battery separator.
FIG. 3 is a schematic structural diagram of a positive electrode sheet of a lithium battery.
FIG. 4 is a schematic structural diagram of a negative electrode sheet of a lithium battery.
FIG. 5a is a schematic diagram when the separator and the positive and negative electrode sheets are wound by a rolling needle.
FIG. 5b is a schematic diagram of the wound core after the rolling needle is drawn out.
FIG. 6 is a schematic diagram showing the separators are hot-pressed and compounded.
FIG. 7 is a schematic diagram of carrying out 90° peeling with an electronic universal testing machine.
FIG. 8 is an SEM image of a ceramic surface of an EJ oil-based separator 5 before hot-pressing.
FIG. 9 is an SEM image of a substrate surface of an EJ oil-based separator 1 before hot-pressing.
FIG. 10 is an SEM image of the ceramic surface of the EJ oil-based separator 5 after peeling.
FIG. 11 is an SEM image of the ceramic surface of an EJ oil-based separator 6 after peeling.
FIG. 12 is an SEM image of the substrate surface of the EJ oil-based separator 1 after peeling.
FIG. 13 is an SEM image of a substrate surface of an EJ oil-based separator 2 is after peeling.

The specific embodiments of this invention will be described in further detail below with reference to the accompanying drawings.

### DESCRIPTION OF EMBODIMENTS

This invention will be described in detail below with reference to the accompanying drawings. When describing the embodiments of this invention in detail, for the convenience of explanation, the accompanying drawings representing a device structure will not be partially enlarged according to the general scale, and the schematic diagrams are only illustrative, which should not limit the protection scope of this invention. It should be noted that the accompanying drawings are in a simplified form and all use inaccurate scales, and are only used to facilitate and clearly assist explaining the purpose of the embodiments of this invention.

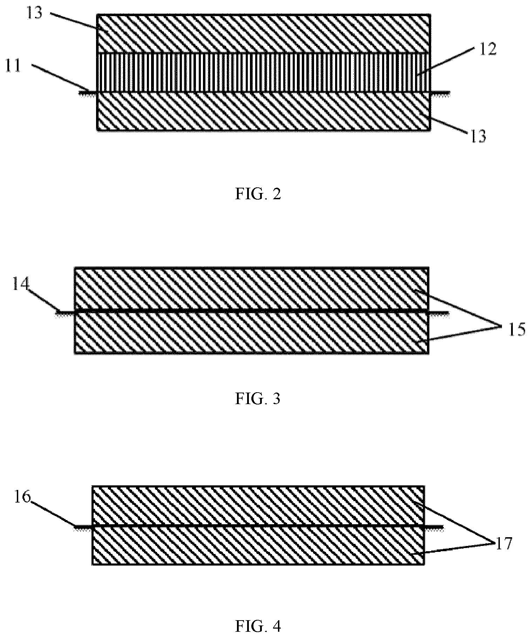

A lithium battery includes a wound core and tabs. The wound core is formed by stacking a positive electrode sheet (a first electrode sheet), a negative electrode sheet (a second electrode sheet) and a separator together, and then winding them. The separator is located between the positive electrode sheet and the negative electrode sheet. As shown in FIG. 2, the separator of the lithium battery includes a base film 11, a ceramic layer 12 provided on one or both sides of the base film 11, and an adhesive layer 13 located at the outermost layer of the separator. The separator shown in FIG. 2 has the ceramic layer 12 only provided on one surface of the base film 11 and adhesive layer 13 provided on the other surface of the base film 11, and an outer surface of the ceramic layer 12 is also provided with the adhesive layer 13. The separator of this embodiment has a structure of the base film + single-layer ceramic layer + double-sided adhesive layer. A surface of the separator with both the ceramic layer and the adhesive layer is defined as a ceramic surface, and a surface of the separator only with the adhesive layer is defined as an adhesive surface or a substrate surface.

The base film may be a single-layer PE (polyethylene) film or a single-layer PP (polypropylene) film or a three-layer PP-PE-PP film structure, and a thickness of the base film may be 3 µm-20 µm. When only one side of the separator is provided with the ceramic layer, a thickness of the ceramic layer may be 0.5 µm-3 µm; and when both sides of the separator are provided with the ceramic layers, the thickness of the ceramic layer may be 0.5 µm-5 µm. The ceramic layer contains ceramic particles and an adhesive polymer, and the ceramic particles may be alumina, boehmite, magnesium oxide, and the adhesive polymer is at least one of polyvinylidene fluoride, polyvinylpyrrolidone, vinylidene fluoride-hexafluoropropylene polymer, polyacrylonitrile, sodium carboxymethyl cellulose, sodium polyacrylate, polyacrylic acid, polyacrylate, styrene-butadiene copolymer, butadiene-acrylonitrile polymer, polyvinyl alcohol, polymethyl acrylate, polymethyl methacrylate, polyethyl acrylate and polyacrylic acid-styrene polymer. In the ceramic layer, the content (mass percentage) of ceramic particles is 85-92%, with a balance of adhesive polymer. The particle size distribution of the ceramic particles is: D10 particle size being 0.15-0.3 µm, D50 particle size being 0.35-0.45 µm, D90 particle size being 0.6 -0.8 µm, D100 particle size being less than 4.5 µm.

The adhesive layer has a thickness of 0.5 µm-3 µm and a packing density of 0.6 g/m²-3.0 g/m², and the adhesive layer contains the adhesive polymer, and the adhesive polymer is at least one of polyvinylidene fluoride, polyvinylpyrrolidone, vinylidene fluoride-hexafluoropropylene polymer, polyacrylonitrile, sodium carboxymethyl cellulose, sodium polyacrylate, polyacrylic acid, polyacrylate, styrene-butadiene copolymer, butadiene-acrylonitrile polymer, polyvinyl alcohol, polymethyl acrylate, polymethyl methacrylate, polyethyl acrylate, and polyacrylic acid-styrene polymer. When the separator is a water-based separator, the adhesive layer includes the adhesive polymer, a binder and a dispersing agent, in which the content (mass percentage) of the adhesive polymer is 92-96%, and the content of the binder is 2.5-5.5%, and the content of the dispersing agent is 1.5-2.5%. When the separator is an oil-based mixed-coating separator, the adhesive layer includes an adhesive polymer and ceramic particles, in which, the adhesive polymer has a content (mass percentage) of 30-50% and the content of the ceramic particles is 50-70%. When the separator is a pure oil-based separator, the content of the adhesive polymer in the adhesive layer is 100%, and the adhesive polymer has a molecular weight of 0.3 to 1 million.

As shown in FIG. 3, the positive electrode sheet of the lithium battery includes a positive electrode foil 14 and positive electrode active material layers 15 coated on both sides of the positive electrode foil 14. The positive electrode foil 14 may be an aluminum foil and have a thickness of 8 µm-14 µm. The positive electrode active material layer includes a positive electrode material, a conductive agent and a binder, and the positive electrode material may be one of LiCoO₂, LiNiO₂, LiFePO₄, LiMn₂O₄, and LiNiₓCo_{y}Mn_{1-x-y}O₂, and the conductive agent may be one or more of conductive carbon black, carbon nanotube, conductive graphite and graphene, and the binder may be one or more of polyvinylidene fluoride, vinylidene fluoride-fluorinated olefin copolymer, polytetrafluoroethylene, sodium carboxymethyl cellulose, styrene-butadiene rubber, polyurethane, fluorinated rubber and polyvinyl alcohol. In the positive electrode active material layer, the positive electrode material has a content (mass percentage) of 96-98.5%, and the conductive agent has a content of 0.5-2.5%, and the binder has a content of 1-1.5%.

As shown in FIG. 4, the negative electrode sheet of the lithium battery includes a negative electrode foil 16 and negative electrode active material layers 17 coated on both sides of the negative electrode foil 16. The negative electrode foil 16 may be a copper foil, and have a thickness of 5 µm-10 µm. The negative electrode active material layer includes a negative electrode material, a conductive agent, a binder and a dispersing agent. The negative electrode material may be one or more of mesophase carbon microsphere, artificial graphite, natural graphite, hard carbon, soft carbon, lithium titanate, silicon-based material, tin-based material and lithium metal; and the conductive agent may be conductive carbon black, carbon nanotube, conductive graphite and graphene; the binder may be one or more of polyvinylidene fluoride, vinylidene fluoride-fluorinated olefin copolymer, polytetrafluoroethylene, sodium carboxymethyl cellulose, styrene-butadiene rubber, polyurethane, fluorinated rubber, and polyvinyl alcohol; and the dispersing agent may be sodium carboxymethyl cellulose or potassium carboxymethyl cellulose. In the negative electrode active material layer, the content (mass percentage) of the negative electrode material is 95-97%, and the content of the conductive agent is 1-2%, and the content of the binder is 1-1.5%, and the content of the dispersing agent is 0-1.5%.

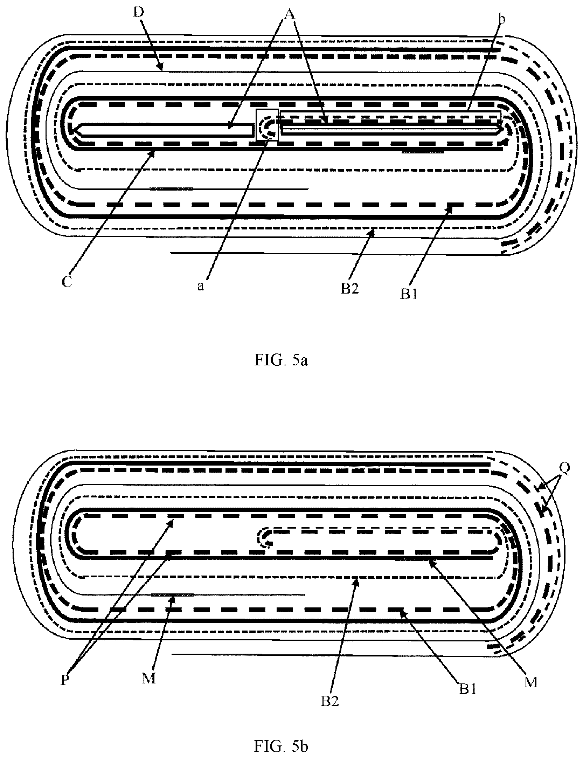

As shown in FIG. 5a, during the preparation of the wound core, a rolling needle A clamps heads of two layers of separators and drives the separators to rotate. In FIG. 5a, the thick dotted line represents a separator located at an inner side of the two layers of separators - an inner separator B1, where the inner separator B1 is in contact with the rolling needle A; and the thin dotted line represents a separator located at an outer side of the two layers of separators - an outer separator B2, where the outer separator B2 is stacked on the outside of the inner separator B1 and not in direct contact with the rolling needle A. During the winding of separators, the rolling needle A will clamp the heads of the two layers of separators, and a part of each separator that is clamped by the rolling needle is defined as a clamping section; and the clamping section of the inner separator B1 and the clamping section of the outer separator are stacked together, for example, a part located in the wireframe a as shown in FIG. 5a. During the winding of separators, a part before first bending of the separators is defined as a first straight section, which is located behind the clamping section, and the first straight section of the inner separator B1 and the first straight section of the outer separator B2 is stacked together, for example, a part located in the wireframe b as shown in FIG. 5a. After the rolling needle A drives the separators to rotate for half a circle, a negative electrode pressing roller (not shown) presses against a negative electrode sheet C (the thick solid line in FIG. 5a represents the negative electrode sheet), and the negative electrode sheet C is introduced by the separators and located between the inner separator B1 and the outer separator B2. After rotating further for half a circle, a positive electrode pressing roller (not shown) presses against a positive electrode sheet D (the thin solid line in FIG. 5a represents the positive electrode sheet), and the positive electrode sheet D is introduced along the separators, so that the positive electrode sheet D and the negative electrode sheet C are separated by the separators, and the early-stage winding action is completed. And then, the positive and negative electrode pressing rollers are retracted, and the positive and negative electrode sheets rotate with the rotation of the separators to obtain a wound core, forming a winding structure which has a layer of separator - a layer of negative electrode sheet - a layer of separator - a layer of positive electrode sheet. In addition, another winding process may also be used, that is, after the rolling needle clamps the clamping section of the separators and rotates for half a circle, the positive and negative electrode sheets are simultaneously introduced to form a winding structure having a layer of separator - a layer of positive electrode sheet - a layer of separator - a layer of negative electrode sheet.

For the wound core of this embodiment, tails of the two layers of separators both extend beyond a tail of the positive electrode sheet, and the tails of the two layers of separators have a part overlapped and laminated together, in which end parts of the two layers of separators that extend beyond the positive electrode sheet and laminated together are each defined as a tail laminating section, for example, a part indicated by arrow Q as shown in FIG. 5b. When the rolling needle A is drawn out, parts of the inner separator B1 that are in direct contact with the rolling needle will be overlapped and contacted with each other together due to the drawing out of the rolling needle; the parts of the inner separator B1 that overlap with each other after the rolling needle A is drawn out are defined as a first inner-layer laminating section, for example, parts as indicated by arrow P in FIG. 5b.

The wound core shown in FIG. 5b has two structures. One structure is: a surface of the separator opposite to the rolling needle is the ceramic surface, and the opposite surfaces between the two adjacent separator layers are adhesive surfaces (the part in the wireframe **a** and the part in the wireframe **b** in FIG. 5a, and the part indicated by the arrow Q in FIG. 5b); after the rolling needle is drawn out, the clamping section of the inner separator B1 will be opposite to the first straight section thereof, that is, the ceramic surface of the clamping section is opposite to the ceramic surface of the first straight section. Another structure is: the surface of the separator opposite to the rolling needle is the adhesive surface, and the opposite surfaces between the two adjacent separator layers are ceramic surfaces; after the rolling needle is drawn out, the clamping section of the inner separator B1 will be opposite to the first straight section thereof, that is, the adhesive surface of the clamping section is opposite to the adhesive surface of the first straight section. That is, in the two structures, the opposite surfaces between the two adjacent separator layers are made of the same material, and the opposite surfaces formed by the overlapping of the inner separator itself are also made of the same material. More specifically, a length of the clamping section of the separator (including the inner separator and the outer separator) is 1-15% of a width of the wound core, and a length of the first straight section of the separator (including the inner separator and the outer separator) is 40-50% of the width of the wound core, and the tail laminating section of the separator (including the inner separator and the outer separator) has a length of at least 5 mm, which is 0.1-10% of the width of the wound core. The thick short lines in FIG. 5a and FIG. 5b indicate the tab M.

When the adhesive force of the separator is relatively large, the separator is more prone to stick to the rolling needle during the preparation process of the wound core, resulting in the phenomenon of the folding of non-coated foil (FIG. 1a) and/or the folding of electrode sheets (FIG. 1b) when winding. Moreover, due to the excessive shrinkage of the separator at room temperature (standard shrinkage < 0.3%), the separator will also be adhered to or adsorbed on a newly introduced negative electrode, resulting in a Hi-Pot hot pressing of the wound core, thereby the phenomena of the folding of non-coated foil of the electrode sheet and/or the folding of negative electrode sheet at a single-sided area of the head of the wound core occur. The main reason for these phenomena is that when the cell is wound, due to the retraction of the separator after stretching, the partial non-coated foil and folding occur in the electrode sheet because of adsorption; then the wound core is compacted at 25°C -60°C, leading to the phenomena of the folding of the non-coated foil and the electrode sheet in non-stretching areas of the separators and the electrode sheet.

The inventors found that the separator based on the above structure (including a selection of separator material, a setting of material components, and a structural arrangement of each layer of the separator) has a specific dry peeling force (being equal to the adhesive force of the surface coating of the separator), through which the adhesive effect of the separators between the layers of the wound core may be identified. Therefore, according to the dry peeling force, it is possible to identify the adhesive force between the separators and between the separator and the positive and negative electrodes in advance, judge whether the separator can meet the adhesive requirements after the hot-pressing and formation of the cell in advance, identify the adhesion force between the main materials of the cell in advance, and select a separator with a specific dry peeling force to prepare the wound core of battery, thereby reducing production abnormalities such as folded electrode sheet, and yielding a battery with better hardness and better performance. The dry peeling force in this invention is characterized by performing a 90° peeling on the separators after the separators are hot-pressed and compounded in an electrolyte-free environment, in which such peeling force is called the dry peeling force.

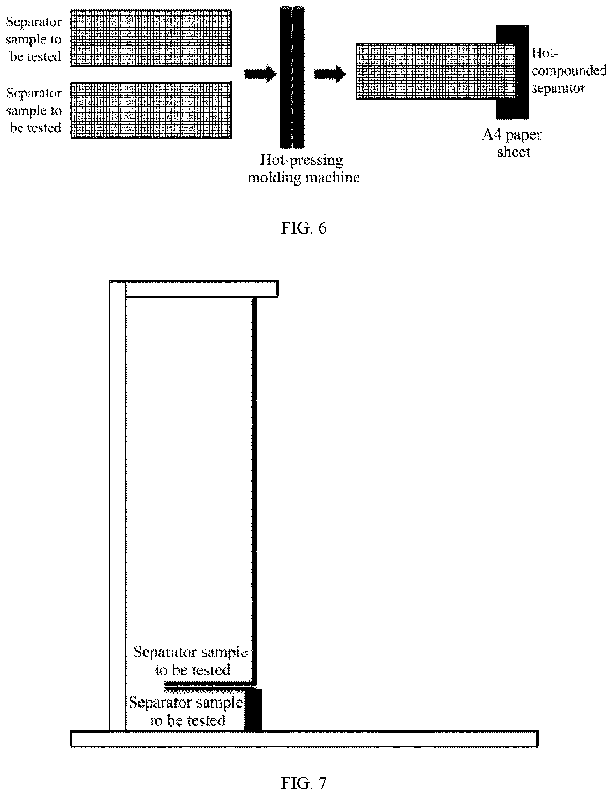

Hereinafter in conjunction with FIG. 6 and FIG. 7, the process of testing the peeling force in this invention is described with specific steps as follows.

S1: the separator to be tested is cut into separator samples with suitable size; for example, the separator to be tested is cut into a long strip with a certain width, such as a small strip with a width of 15 mm. Two cut pieces of separator samples to be tested are aligned and stacked, and a paper sheet is introduced at one end of stacked samples so as to separate the two pieces of separator samples to be tested. For example, when the separator on the clamping section is tested, the inner separator and outer separator that are laminated together at the clamping section are cut into samples, followed by aligning and stacking.

S2: the two pieces of separator samples to be tested that are stacked are subjected to hot-sealing treatment for the laminated surfaces using a thermoplastic machine; in this embodiment, the thermoplastic machine used has a model of SKY-325R6, and a hot pressing temperature is 100°C, a surface pressure is 0.2 MPa, and a hot pressing time is 10 s.

S3: after the hot pressing treatment is completed, the paper sheet that is clamped between the separator samples to be tested is pulled out, and the two pieces of separator samples to be tested that are pressed together are separated from the end and subjected to a 90° peeling, followed by recording the dry peeling force during separation of the two pieces of separator samples to be tested; in this embodiment, an electronic universal testing machine is used to perform a 90° peel test on the separator samples to be tested, in which one end of one piece of the separator sample to be tested is fixed with a moving end of the electronic universal testing machine, and one end of the other piece of separator sample to be tested is fixed with a fixing end of the electronic universal testing machine, and the preload speed and the test speed are set to 100 mm/min, and the two pieces of separator samples to be tested are separated (FIG. 7), and the peeling force during separation of the separator samples to be tested is recorded.

This invention evaluates the adhesive force between the separator coatings by the dry peeling force, therefore, when the dry peeling force between the separators is tested, the separators with same material that are pressed together are separated, in which the two separators have the same coating, instead of using auxiliary materials with different surface materials such as quick-drying adhesive and double-sided tape, so that more accurate data on the adhesive force of the separator surface coatings may be obtained. In addition, the samples to be tested are pressed and compounded together by hot pressing, which is simple and quick to operate, and the 90° peel test is more convenient than a 180° peel test which requires the aid of other auxiliary materials.

The following table shows the results of peeling force testing on three different types of oil-based separators.

| EJ oil-based separator (26 m/min) | Adhesive surface (N/m) | Ceramic surface (N/m) | EJ oil-based separator (16 m/min) | Adhesive surface (N/m) | Ceramic surface (N/m) | Oil-based separator with large holes | Adhesive surface (N/m) | Ceramic surface (N/m) |
|---|---|---|---|---|---|---|---|---|
| EJ oil-based separator 1 | 18.4 | 12.1 | EJ oil-based separator 5 | 16.6 | 8.0 | Oil-based separator with large holes 1 | 3.9 | 3.8 |
| EJ oil-based separator 2 | 19.9 | 12.7 | EJ oil-based separator 6 | 18.3 | 10.7 | Oil-based separator with large holes 2 | 2.2 | 1.8 |
| EJ oil-based separator 3 | 18.1 | 11.8 | EJ oil-based separator 7 | 16.3 | 5.4 | Oil-based separator with large holes 3 | 3.9 | 2.8 |
| EJ oil-based separator 4 | 19.1 | 12.4 | EJ oil-based separator 8 | 15.4 | 9.4 | Oil-based separator with large holes 4 | 4.2 | 3.6 |
| Average | 18.88 | 12.25 | Average | 16.63 | 8.38 | Average | 3.55 | 2.95 |

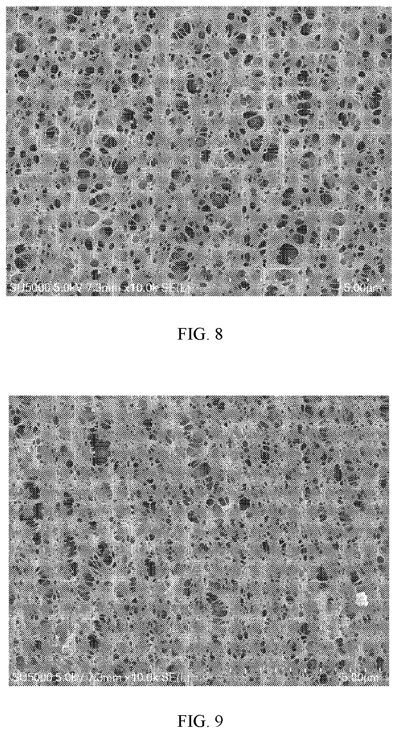

Five kinds of separators are selected from the above separators for which the peeling force has been tested, and wound together with the positive and negative electrode sheets to form a cell, in which the separators used have a width of 83.8 mm, the positive electrode sheet has a width of 79.5 mm, the negative electrode sheet has a width of 81.5 mm, and both the positive electrode sheets and the negative electrode sheets are conventional types for lithium batteries. FIG. 8 and FIG. 9 are SEM images of the substrate surfaces of the EJ oil-based separator 5 and the EJ oil-based separator 1 before hot pressing, respectively. The SEM images of the substrate surfaces of the EJ oil-based separators 6-8 before hot pressing are similar to that of FIG. 8, and the SEM images of the substrate surfaces of the EJ oil-based separators 2-4 before hot pressing are similar to that of FIG. 9. For the cell obtained by the winding, part of each cell is subjected to quality inspection, including the folding of the separator and the peeling and transfer of the coating. The inspection results are shown in the following table. In the following table, the distance of electrode sheet covered by the separator refers to the over-covering size of the separator to the negative electrode sheet, which is used to prevent the short circuit inside the cell. In this invention, a transfer area is further used to determine the transfer performance during the dry peeling of the separator, as another performance parameter to select a suitable separator. Transfer area = transfer mass/separator area, in which transfer mass = mass of separator (to be tested) before dry peeling - mass of separator (to be tested) after dry peeling. Taking a separator with a width of 15 mm and a length of 150 mm as an example, the mass of the separator before dry peeling is 0.18 g, and the mass of the separator after dry peeling is 0.12 g, then the transfer area=0.06/0.00225=26.67; glue transfer ratio of separator = 0.06/0.18×100%=33% (the glue transfer ratio of separator = mass of separator (to be tested) before dry peeling- mass of separator (to be tested) after dry peeling/ mass of separator (to be tested) before dry peeling × 100%). If the transfer area is larger, the adhesiveness is greater, the adhesion between the electrode sheets of the cell and the separator is greater, and accordingly, the winding is more difficult, and the ratio of removed core and poor spacing is larger, and the possibility of folding is more, and the battery has more hardness.

| Separator type | Adhesive surface (N/m) | Ceramic surface (N/m) | Length/width of folding | Distance of electrode sheet covered by the separator | Glue transfer ratio of separator |
|---|---|---|---|---|---|
| EJ oil-based separator 5 | 16.6 | 8.0 | Length 4.35 mm | 2.3 mm | 32% |
| | | | Width 0.2 mm | | |
| EJ oil-based separator 8 | 15.4 | 9.4 | Length 3.52 mm | 2.3 mm | 38% |
| | | | Width 0.15 mm | | |
| Oil-based separator with large hole 1 | 3.9 | 3.8 | None | 2.3 mm | 0% |
| EJ oil-based separator 1 | 18.4 | 12.1 | Length 6.87 mm | 2.3 mm | 68% |
| | | | Width 0.45 mm | | |
| EJ oil-based separator 3 | 18.1 | 11.8 | Length 7.83 mm | 2.3 mm | 55% |
| | | | Width 0.35 mm | | |

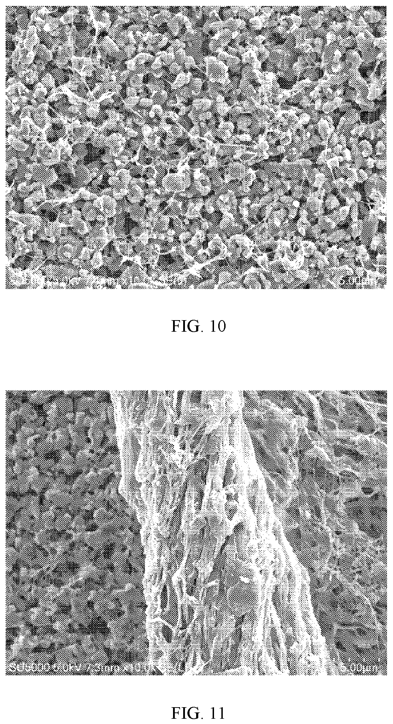

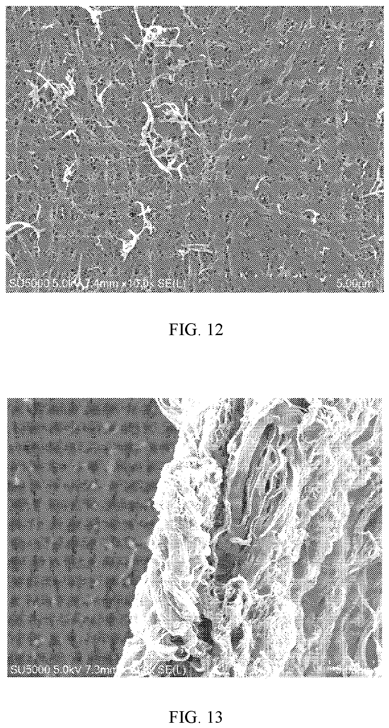

According to the sampling inspection results, for micro concave roll oil-based separator, when the dry peeling force of the ceramic surface is greater than 10 N/m, the folding of electrode sheet and non-coated foil is prone to appear in the wound core when winding during the winding process, and the folding phenomena of non-coated foil and electrode sheet is prone to appear during the hot-pressing or drying of the wound core, accounting for 80% or more. SEM images of the ceramic surface (the ceramic layer and the adhesive layer) and the substrate surface (the adhesive layer) of the separator are shown in FIG. 10 to FIG. 13 respectively, in which the phenomenon of peeling and transfer appears at the adhesive layer of each of the ceramic surface and the substrate surface of the separator, and the transfer area reaches up to 40% -80%; and with the increase of the dry peeling force, the glue transfer ratio of separator and the transfer area increase. For a single piece of separator, the dry peeling force of the adhesive surface (substrate surface) is greater than that of the ceramic surface, so the dry peeling force of the ceramic surface may be used for selecting separator material.

When the dry peeling force of the ceramic surface is in the range of 5 N/m-8 N/m, the proportion of electrode sheet and non-coated foil being folded occurred in the wound core decreases significantly when winding during the winding process, and the proportion of non-coated foil and folded electrode sheet occurred during the hot-pressing or baking of the wound core is obviously reduced to 30%. After a dry pressing, the ceramic surface and the substrate surface of the separator both show an effect of SEM images similar to FIG. 10 to FIG. 13; the phenomenon of peeling and transfer appears at the adhesive layer of the ceramic surface or the substrate surface of the separator, in which the transfer area is reduced to 20% to 40%.

When the dry peeling force of the ceramic surface is less than 5 N/m, the manufacturing process of the wound core is stable, and the folding of the electrode sheet and the non-coated foil rarely occurs in the wound cell when the wound cell is removed from the working table during the winding process, and the phenomena of non-coated foil and folded electrode sheet rarely occur during the hot-pressing or drying of the wound core, and the ceramic surface and the substrate surface of the separator after peeling do not appear the effect of SEM images shown in FIG. 10 to FIG. 13.

To sum up, it can be seen that for the separator with a larger dry peeling force (adhesive force), when the dry peeling force is greater than 8 N/m, it cannot be used well in the winding process; when the dry peeling force is less than 8 N/m, the phenomenon of electrode sheet being folded has been improved; when the dry peeling force is less than 5 N/m, the separator is well used in the winding process, the manufacturing process of the wound core is stable, and the proportion of the electrode sheet being folded is relatively low, even low to 0. However, for the separator with a larger adhesive force, the adhesion effect will occur after the wound core is compacted, and the phenomenon of separator adhesion is also prone to occur at the area of the separator beyond the negative electrode, which makes the separator have an improved adhesion effect, show better adhesive performance during hot pressing and formation in subsequent process, and realize the adhesion between the separators and the positive and negative electrode sheets. Accordingly, the battery has a better hardness, and the separators at the head and bottom of the wound core in the cell have a better contact adhesion during hot pressing and formation, and the internal short circuit caused by the contact of the positive and negative electrodes may be avoided when the cell is subjected to a furnace temperature test for the safety performance. However, if the electrode sheet or the separator is folded, the safety performance of the cell will be reduced.

Therefore, in order to avoid the problems that the electrode sheets are folded after winding, top & side sealing and baking, in this invention, the separator is selected according to the dry peeling force of the separator surface, and the dry peeling forces of the first straight section of the inner separator and the first straight section of the outer separator in the wound core of the lithium battery are each less than 8 N/m, thereby improving the folding phenomenon of the electrode sheet. By making the first straight section of the separator have a low dry peeling force, the phenomenon of the folding of the electrode sheet is improved, without affecting the adhesion of other parts of the separator, so as to ensure the hardness of the battery. More preferably, the dry peeling force is the dry peeling force of the ceramic surface of the separator.

In this invention, the separator material is selected according to the dry peeling force, which is convenient for the control of the separator coating and is capable of identifying the adhesive effect between the separator layers in time; and the separator material is selected to match the rolling needle (Teflon) based on the dry peeling force. By controlling the dry peeling force of the separator, it is possible to avoid in advance the problem of the folding of electrode sheet after winding, top & side sealing and baking, which is beneficial to improve the winding yield and the product yield. In addition, the dry peeling force in this invention is determined by testing the peeling force between the separator coatings with an electronic universal testing machine after the separators are hot-pressed, so the hardness of the battery in subsequent process may be identified at a primary stage of winding by the dry peeling force between layers, and the adhesion force between the respective main materials of the cell may be identified in advance, and furthermore the battery with better hardness and better performance can be obtained. In addition, the dry peeling force may be used as an incoming management method for the separator coatings to identify a macroscopic index of separator incoming in time, and further determine whether the separator incoming is capable of meeting the adhesive performance of the cell after being hot pressed and subjected to formation.

The above description of the disclosed embodiments enables those skilled in the art to achieve or use this invention. Various modifications to these embodiments will be obvious for those skilled in the art, and the generic principles defined herein may be implemented in other embodiments without departing from the spirit or scope of the invention. Therefore, this invention is not intended to be limited to the embodiments shown herein, but is to conform to the widest scope consistent with the principles and novel features disclosed herein.

## Claims

1. A lithium battery, comprising a wound core and a tab, **characterized in that**: the wound core is formed by stacking and winding an inner separator, a first electrode sheet, an outer separator and a second electrode sheet, and the first electrode sheet and the second electrode sheet have opposite polarity;
the inner separator is located at the innermost layer of the wound core, and each of the inner separator and the outer separator has a clamping section, a first straight section connected with the clamping section and located behind the clamping section, and a tail laminating section extending beyond a tail end of the first electrode sheet, wherein the first straight section is located in front of the first electrode sheet, and the tail laminating section is a separator end, and the clamping section, the first straight section and the tail laminating section of the inner separator are respectively laminated with the clamping section, the first straight section and the tail laminating section of the outer separator; and
a dry peeling force of each of the first straight section of the inner separator and the first straight section of the outer separator is less than 8 N/m.

2. The lithium battery according to claim 1, **characterized in that** the dry peeling force is determined by the following method:
S1: cutting a separator to be tested into separator samples with suitable size, and aligning and stacking two pieces of separator samples to be tested;
S2: subjecting stacked separator samples to be tested to a hot-pressing treatment with a hot-pressing temperature of 100°C, a pressure of 0.2 MPa, and a hot-pressing time of 10 s; and
S3: after the hot pressing treatment is completed, separating the separator samples to be tested that are pressed together from one end of the separator samples to be tested, performing a 90° peeling, and recording a peeling force during separation of the separator samples to be tested are separated, the peeling force being the dry peeling force.

3. The lithium battery according to claim 1, **characterized in that** the inner separator and the outer separator each comprise a base film, a ceramic layer and an adhesive layer, and a surface of the base film is provided with the ceramic layer or the adhesive layer, and an outer surface of the ceramic layer is provided with the adhesive layer; and a surface of the separator having both the ceramic layer and the adhesive layer is a ceramic surface, and at least one surface of each of the inner separator and the outer separator is the ceramic surface.

4. The lithium battery according to claim 3, **characterized in that** surfaces of the inner separator and of the outer separator that are opposite to each other on the clamping section, the first straight section and the tail laminating section are ceramic surfaces.

5. The lithium battery according to claim 3, **characterized in that** the dry peeling force is a dry peeling force of the ceramic surface of the separator.

6. The lithium battery according to claim 1, **characterized in that** the inner separator and the outer separator each comprise a base film and an adhesive layer, and a surface of the base film on which the adhesive layer is disposed is an adhesive surface, and at least one surface of each of the inner separator and the outer separator is the adhesive surface.

7. The lithium battery according to claim 6, **characterized in that** surfaces of the inner separator and of the outer separator that are opposite to each other on the clamping section, the first straight section and the tail laminating section are the adhesive surfaces.

8. The lithium battery according to claim 1, **characterized in that** a length of the clamping section of the inner separator and a length of the clamping section of the outer separator are each 1-15% of a width of the wound core; and/or a length of the first straight section of the inner separator and a length of the first straight section of the outer separator are each 40-50% of the width of the wound core.

9. The lithium battery according to claim 1, **characterized in that** both the tail laminating section of the inner separator and the tail laminating section of the outer separator have a length ≥ 5 mm; and/or a length of the tail laminating section of the inner separator and a length of the tail laminating section of the outer separator are each 0.1-10% of a width of the wound core.

10. The lithium battery according to claim 1, **characterized in that** the dry peeling force of each of the first straight section of the inner separator and the first straight section of the outer separator is less than 5 N/m.
